# EUROPÄISCHE PATENTSCHRIFT

(11) **EP 1 523 652 B1**
(45) Veröffentlichungstag und Bekanntmachung des Hinweises auf die Patenterteilung: **01.04.2009**
(21) Anmeldenummer: 03787732.1
(22) Anmeldetag: 24.07.2003
(51) Int. Cl.: G01B 7/34, G12B 21/00, G01N 27/00

(54) **VERFAHREN ZUR ÖRTLICH HOCHAUFGELÖSTEN, MASSENSPEKTROSKOPISCHEN CHARAKTERISIERUNG VON OBERFLÄCHEN MITTELS EINER RASTERSONDENTECHNIK**
METHOD FOR LOCALLY HIGHLY RESOLVED, MASS-SPECTROSCOPIC CHARACTERISATION OF SURFACES USING SCANNING PROBE TECHNOLOGY
PROCEDE DE CARACTERISATION DE SURFACES PAR SPECTROMETRIE DE MASSE A HAUTE RESOLUTION LOCALE A L'AIDE D'UNE TECHNIQUE SONDE A BALAYAGE

(30) Priorität: 24.07.2002 DE 10234507
(43) Veröffentlichungstag der Anmeldung: 20.04.2005
(73) Patentinhaber: JPK Instruments AG, 12435 Berlin (DE)
(72) Erfinder: KNEBEL, Detlef, 12305 Berlin (DE); AMREIN, Matthias, Calgary, Alberta T3H 1H5 (CA); DREISEWERD, Klaus, 48155 Münster (DE)
(74) Vertreter: Bittner, Thomas L.
(86) Internationale Anmeldenummer: PCT/DE2003/002493
(87) Internationale Veröffentlichungsnummer: WO 2004/017019

(56) Entgegenhaltungen:
- EP-A- 0 596 494
- US-A- 5 278 406
- US-A- 5 440 122
- US-B1- 6 405 137
- PATENT ABSTRACTS OF JAPAN vol. 1996, no. 08, 30. August 1996 (1996-08-30) & JP 08 094646 A (SHIMADZU CORP), 12. April 1996 (1996-04-12)

## Beschreibung

Die vorliegende Erfindung betrifft ein Verfahren zur hochaufgelösten mikroskopischen Beobachtung der Oberflächenstruktur und gleichzeitig der den beobachteten Strukturelementen zugeordneten molekularen Zusammensetzung einer Probenoberfläche. Die Erfindung betrifft auch eine Vorrichtung mit einem speziell angepaßten Rasterkraftmikroskop und einem speziell angepaßten Massenspektrometer zur Durchführung des Verfahrens.

Ein Rasterkraftmikroskop (SFM - "scanning force microscope") tastet die Oberflächenstruktur einer zu untersuchenden Probe mittels einer piezoelektrischen Mechanik rasterförmig ab. Die Mechanik kann sowohl in der Probenebene (x/y-Richtung) als auch senkrecht dazu (z-Richtung) bewegt werden. Als erstes wird die Probe über eine Bewegung in z-Richtung in Kontakt mit einer Spitze gebracht. Die Spitze sitzt am freien Ende eines einseitig eingespannten Federbalkens ("cantilever"). Der Federbalken ist typischerweise zwischen 10 µm und 500 µm lang, die Spitze ist im Idealfall atomar scharf. Federbalken und Spitze sind in der Regel integriert und bestehen in den meisten kommerziellen Produkten derzeit aus Silizium oder Siliziumnitrid. Die Verbiegung des Federbalkens aufgrund der zwischen Probe und Spitze herrschenden Kraft wird üblicherweise mittels des optischen Zeigerprinzips gemessen und auf einen gewünschten (Soll-)Wert eingestellt.

In der sogenannten Kontakt-Betriebsartr ("contact-mode") wird ein Abbild der Probenoberfläche folgendermaßen gewonnen: Während ein Ausschnitt der Probenoberfläche abgerastert wird, wird jede weitere Verbiegung des Federbalkens aufgrund der Probentopologie mittels Rückkoppelung auf den Sollwert zurückgeführt. Die Stellung der Rastereinheit in z-Richtung als Funktion jedes Ortes in x/y spiegelt die Probentopologie wieder und wird aufgezeichnet.

Im sogenannten "intermittent-contact-mode" wird der Federbalken vor einer Annäherung an die Probe nahe seiner mechanischen Resonanzfrequenz zur Schwingung angeregt. Nach Annäherung an die Probe berührt dann die Spitze die Probe in jedem Schwingzyklus einmal kurzzeitig. Dies führt zu einer Dämpfung der Schwingung und damit zu einer geringeren Schwingamplitude. Diese wird gemessen und als Maß für die Stärke der Wechselwirkung zwischen Probe und Spitze auf einen bestimmten Wert eingestellt. Nun wird wie oben beschrieben die Probenoberfläche abgebildet.

Die "time-of-flight" (TOF)-Massenspektroskopie dient der Untersuchung der molekularen Zusammensetzung eines Analyten aufgrund der Molekularmassen der Komponenten. Die Elemente einer zu untersuchenden Probe werden in einem Vakuumsystem auf unterschiedliche Weise aus der festen Phase in die Gasphase überführt. Beispielsweise wird eine Probenregion hierfür mit einem Laserimpuls beschossen. Dabei entstehen geladene Moleküle oder Molekülfragmente, die in einem luftleeren Flugrohr mittels Elektroden beschleunigt werden und nach einem Flugweg von beispielsweise 60 bis 100 cm auf einen Detektor treffen. Aus der Flugzeit wird das Molekulargewicht berechnet: Je schwerer das Molekül, desto länger die Flugzeit. Dieses Verfahren ist sehr empfindlich und genau; es werden nur subpicomolare Mengen benötigt. Grundsätzlich ist in einer TOF-Anordnung die Detektion einzelner Ionen technisch möglich. Der Fehler liegt bei ± 0.05 Da pro 1000 Da.

Die Rasterkraftmikroskopie hat primär zum Ziel, über die Abbildung der Struktur eine Aussage über den Zustand einer Probenoberfläche zu ermöglichen. Unter idealen Voraussetzungen kann die atomare Struktur einer Probenoberfläche aufgelöst werden. Dies gilt für Oberflächen kristalliner Strukturen und im eingeschränkten Maße für hochgeordnete organische und anorganische Adsorbate an Oberflächen. In diesen Fällen kann direkt eine Aussage über den Zustand der Probenoberfläche getroffen werden.

Abhängig von der Probe wird die Auflösung aber meist nicht erreicht, und die Topographie genügt als Information nicht, um eine Aussage über den Zustand einer Probenoberfläche zu treffen. In diesen Fällen ist eine Identifikation der örtlichen chemischen Natur oder der örtlichen molekularen Zusammensetzung einer Probenoberfläche mit anderen Mitteln als die der mikroskopischen Strukturaufklärung notwendig. Diese Aussage trifft nicht nur auf die Rasterkraftmikroskopie zu, sondern auch auf jedes andere mikroskopische Verfahren (Elektronenmikroskopie, Lichtmikroskopie, etc.). Es kommen deshalb Verfahren zum Einsatz, die eine mikroskopische Abbildung mit einer im weiten oder engen Sinne chemischen Analyse kombinieren. Im folgenden werden zwei Verfahren beschrieben, die in Beziehung zum erfindungsgemäßen Verfahren stehen. Sie beruhen auf einer lokalen Ablation der Oberfläche und anschließender Massenspektroskopie.

In der "Laser Desorption Mass Spectrometry" (LAMMA) wird ein Laserimpuls auf eine über konventionelle Lichtmikroskopie gewählte Stelle einer Probe fokussiert. Dies führt zu einer lokalen Ablation der Probe und der Erzeugung von Molekülionen aus dem lokal abgetragenen Material. Die Ionen werden im elektrischen Feld beschleunigt und mittels eines Flugzeit-Massenspektrometers aufgrund ihrer molekularen Masse identifiziert. Zu erwähnen ist insbesondere eine Anordnung des LAMMA (LAMMA 2000; Spengler, B. und Hubert, M: Scanning Microprobe Matrix-Assisted Laser Desorption Ionization (SMALDI) Mass Spectrometry: Instrumentation for Sub-Micrometer Resolved LDI and MALDI Surface Analysis, J. Soc. Mass. Spectrom. 13, 735-748, 2002), in der das beschriebene Prinzip zur kombinierten Abbildung der Struktur mittels der konfokalen Lichtmikroskopie und lokalen molekularen Zusammensetzung mittels der Massenspektrometrie von Proben optimiert worden ist. In dieser Anordnung ist sowohl die optische Auflösung als auch die minimale Probenregion, aus der Ionen gewonnen und detektiert werden können, beugungslimitiert. In der Praxis wurde eine optische und analytische Auflösung von 0.5 µm erzielt, d.h. die minimale analysierte Probenregion besaß einen Durchmesser von 0.5 µm.

Die Flugzeit-Sekundärionen-Massenspektrometrie (TOF-SIMS) ist eine analytische Methode zur örtlich aufgelösten chemischen Charakterisierung von Materialoberflächen anorganischer, organischer und biologischer Natur. Das Verfahren beruht auf der zeitaufgelösten Erfassung von Sekundärionen, welche durch den Beschuß der Oberfläche mit hochenergetischen Primärionen (Cs+, Ga+) erzeugt werden. Hierbei wird der Primärionenstrahl stark fokussiert und über die Probe gerastert. Die hierbei ausgelösten Sekundärionen werden in das Flugrohr eines TOF-Massenspektrometers beschleunigt. Da die effektive Nachweistiefe nur etwa 1nm beträgt, setzt sich das gemessene Massenspektrum nur aus den chemischen Komponenten der obersten Molekularschichten zusammen. Die laterale Auflösung der Ionenbilder beträgt etwa 1 µm.

Die oben beschriebenen Verfahren zur örtlich aufgelösten chemischen Charakterisierung einer Probenoberfläche bewegen sich bezüglich der minimalen analysierten Probenregion im Auflösungsbereich der konventionellen Lichtmikroskopie. Dies ist für viele Fragestellungen in der Medizin, Technik und Naturwissenschaft ungenügend. Beispielsweise sind Zellmembranen in komplexer Weise lateral organisiert sind. Hierbei stellen sogenannte Lipid-Rafts die funktionellen Einheiten einer Vielzahl membrangebunder Prozesse dar. Ihr Durchmesser liegt bei etwa 60 nm. Die Klärung ihrer individuellen Zusammensetzung wäre für ein vollständiges Verständnis der erwähnten membrangebundenen Prozessen von entscheidender Bedeutung.

Die Kombination einer Strukturabbildung im Nanometerbereich mit der Massenspektroskopie mit entsprechender Ortsauflösung verspricht eine Klärung der genannten und einer Vielzahl weiterer Fragestellungen. Hiefür kommt eine Kombination einer Rastersondentechnik (z.B. SFM) mit der Massenspektroskopie in Frage. In der Tat ist bis heute die Möglichkeit der Kombination der Massenspektroskopie mit der hochauflösenden Rasterkraftmikroskopie von verschiedener Seite auf unterschiedliche Weise versucht worden. Entweder wurde durch seitliches Einstrahlen von gepulstem Laserlicht in den Spalt zwischen Probe und SFM-Spitze Probenmaterial gezielt abgetragen oder gepulstes Laserlicht wurde in einem sogenannten Apertur-SNOM (SNOM - "scanning near-field optical microscope") durch eine konisch zugespitzte Glasfaser auf die Probe in Form eines Impulses eingestrahlt. Beide Strategien nützen das Prinzip der Nahfeldoptik, d.h. die Spitze dient zur Erzeugung eines Beleuchtungsflecks, der den geringmöglichsten Durchmesser eines mit konventioneller Optik erzeugten Beleuchtungsfleckdeutlich deutlich unterschreitet.

Auf diese Weise konnten Löcher mit wenigen Nanometer Durchmesser reproduzierbar erzeugt werden. In beiden Fällen wurden entstehende Ionen seitlich aus der Spitzenregion abgesaugt. Allerdings konnte eine eindeutige Zuordnung von Ionen zu einer definierten Region im Nahfeld der Spitze bis heute nicht in überzeugender Weise erreicht werden. Dieser Mangel ergibt sich aus einer ineffizienten Absaugung der Ionen aus dem Nahfeld der Spitze und Probe. Eigene experimentelle Untersuchungen und Modelrechnungen bestätigen den unbefriedigenden Befund: Die Transmission entstehender Ionen in das Flugrohr eines Massenspektrometers ist gering und in unkalkulierbarer Weise von den geometrischen Verhältnissen am unmittelbaren Entstehungsort der Ionen abhängig.

US 5,440,122 offenbart eine Vorrichtung mit einem Rasterkraftmikroskop und einem Massenspektrometer, wobei mittels einer Austrittsöffnung an einer Spitze einer Meßsonde des Rasterkraftmikroskops Gas auf eine Oberfläche einer Meßprobe dosiert wird.

Aus JP-A 08094646 geht eine in einer Vakuumkammer angeordnete Probenkammer hervor, in welcher eine Meßprobe angeordnet ist. Mittels eines Laserstrahls und einer zwischen der Meßprobe und einer Meßsonde eines Rastertunnelmikroskops angelegten Spannung werden Ionen von der Oberfläche der Meßprobe desorbiert. Diese Ionen werden mittels eines Ionenextraktionsloches aus der Probenkammer extrahiert und zur weiteren Analyse einem Massenspektrometer zugeführt.

US 5,278,406 beschreibt eine Vorrichtung zum Detektieren von Elektronen, welche von einer Oberfläche einer Meßprobe emittiert werden. Hierbei wird zwischen der Meßprobe und einer Meßsonde eine elektrische Spannung angelegt.

US 6,405,137 beschreibt eine Vorrichtung mit einem Rasterkraftmikroskop und einem Gaschromatographen / Massenspektrometer. Eine Meßprobe wird erhitzt, und die von der Meßprobe desorbierenden Gase werden mittels einer Kapillarröhre zu dem Gaschromatographen / Massenspektrometer geführt.

In EP-A 0596494 wird ein Verfahren zur Fehlerkorrektur bei einer Messung mit einem Rasterkraftmikroskop beschrieben.

Zusammengefaßt war bis heute eine universelle chemische Analytik von Oberflächen mit einer Ortsauflösung im Nanometerbereich nicht verfügbar.

Die Aufgabe der Erfindung ist es deshalb, ein verbessertes Verfahren und eine verbesserte Vorrichtung anzugeben, bei denen Ionen im Nahfeld einer durch das Rasterkraftmikroskop wählbaren Spitzen-Probenregion in einem sehr kleinen Volumen erzeugt und mit hoher Transmission der Massenspektrometrie zugeführt werden.

Die Aufgabe wird erfindungsgemäß durch eine Vorrichtung nach dem unabhängigen Anspruch 1 und ein Verfahren nach dem unabhängigen Anspruch 7 gelöst. Vorteilhafte Weiterbildungen der Erfindung sind Gegenstand der abhängigen Ansprüche. Nach einem Aspekt ist ein Verfahren vorgesehen, bei dem ein Rasterkraftmikroskop mit einem Federbalken mit integrierter Hohlspitze betrieben wird. Die Hohlspitze ist auf der Probenseite über eine kleine Apertur offen. Die Apertur besitzt vorzugsweise einen Durchmesser deutlich unterhalb der Wellenlänge des verwandten Lichts. Damit wird ein Beleuchtungsfleck nach dem Prinzip der Nahfeld-Optik auf der Probe erzeugt, der im Durchmesser deutlich unterhalb des beugungslimitierten Beleuchtungsflecks einer konventionellen Optik liegt. Die Höhlung der Spitze weitet sich zunehmend zur Rückseite und besitzt dort ihre größte Öffnung.

Insbesondere erlaubt das Verfahren (i) eine unzweideutige Zuordnung aller beobachteten Ionen zu einer definierten Probenregion; (ii) eine Zuordnung der beobachteten Ionen zur Probentopologie; und (iii) eine örtliche Auflösung, sowohl der Topologie als auch der örtlichen molekularen Zusammensetzung unterhalb der Auflösungsgrenze konventioneller optischer Systeme.

Die Rasterkraftmikroskopie wird vorzugsweise konventionell, wie oben beschrieben, in der "intermittent-contact-mode" oder in der "contact-mode" betrieben. Die Mikroskopie findet vorzugsweise im Hochvakuum statt. Alternativ zur Rasterkraftmikroskopie ist auch eine Anpassung anderer Rastersondentechniken zum Einsatz in dem beschriebenen Verfahren denkbar.

Die örtlich aufgelöste Massenspektroskopie findet parallel oder im Anschluß zur SFM-Abbildung statt. Hierbei befindet sich die Spitze im Kontakt oder im unmittelbaren Nahfeld zur Probe. Zur Massenspektroskopie wird von der Rückseite ein Laserpuls axial in die Hohlspitze eingekoppelt. An jeder gewünschten Stelle der Probe wird über einen kurzen Laserpuls Material von der Probe abgetragen und der Massenspektroskopie zugeführt. Hierfür schließt sich axial zur Spitze an deren Rückseitigen Öffnung ein Flugrohr an. Dieses liegt auf einem geeigneten elektrischen Potential relativ zur Spitze und zur Probe und dient zur elektrischen Absaugung der nach einem Laserpuls entstandenen molekularen Ionen. Anschließend fliegen die Ionen vorzugsweise in ein Flugzeit-Massenspektrometer.

Weitere Vorteile und zweckmäßige Fortbildungen der Erfindung ergeben sich aus der folgenden Beschreibung von Ausführungsbeispielen unter Bezugnahme auf eine Zeichnung. Hierbei zeigen:
- Figur 1A: eine schematische Darstellung zur Erläuterung eines Verfahrens nach einer Ausführungsform, wobei eine Querschnitt durch eine Anordnung mit einer Ra- stereinheit, einer Probe, einem Cantilever mit Hohlspitze, einem Flugrohr und einem Objektiv gezeigt ist;
- Figur 1B: eine vergrößerte Darstellung eines Abschnitts der Anordnung nach Figur 1A;
- Figur 2A: eine schematische Darstellung zur Erläuterung eines Verfahrens nach einer weiteren Ausführungsform, wobei eine Querschnitt durch eine Anordnung mit einer Rastereinheit, einer Probe, einem Cantilever mit Hohlspitze, einem Flug- rohr und einem Objektiv gezeigt ist; und
- Figur 2B: eine vergrößerte Darstellung eines Abschnitts der Anordnung nach Figur 2A.

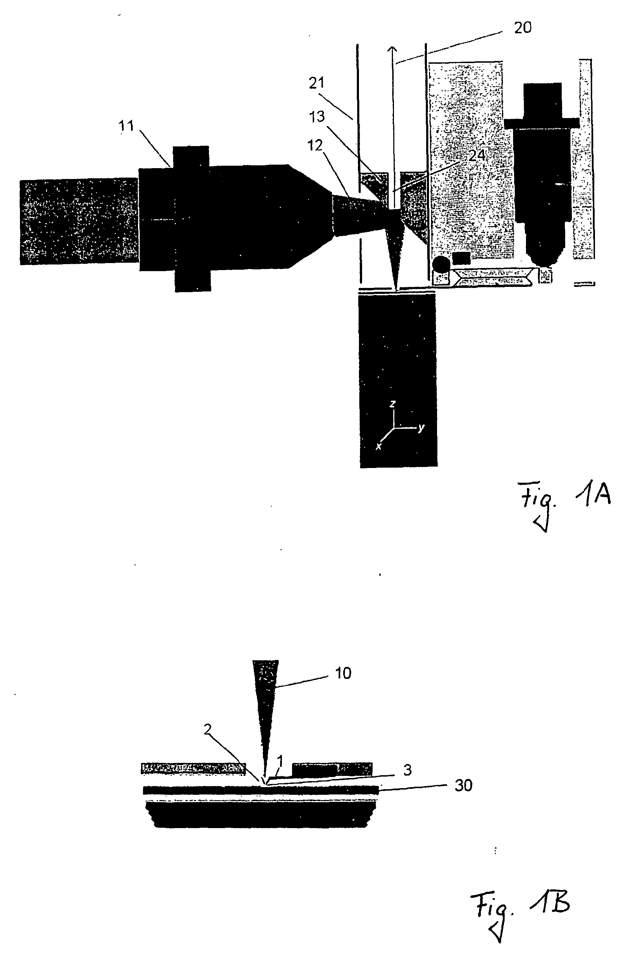

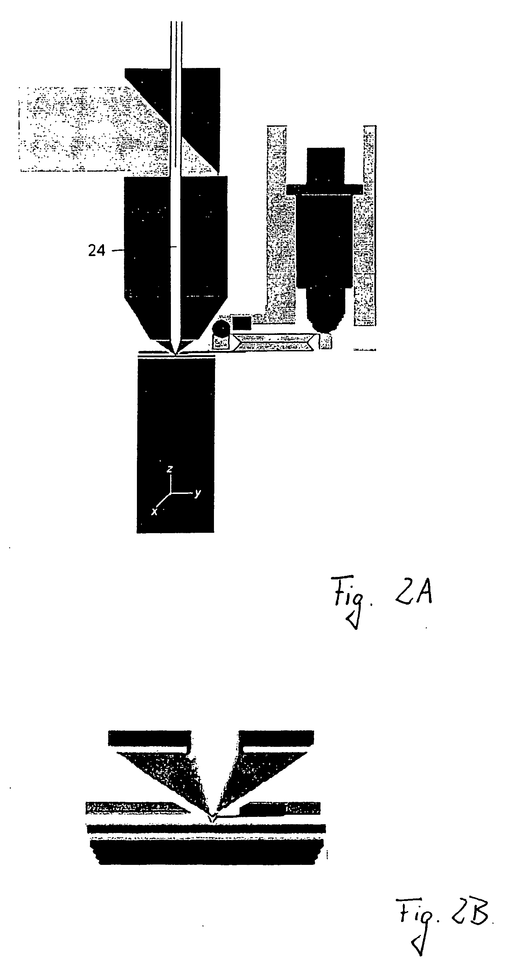

Die Figuren 1A, 1B, 2A und 2B zeigen schematischen Darstellungen zur Erläuterung von zwei Ausführungsformen eines Verfahrens zur örtlich hochaufgelösten, massenspektroskopischen Charakterisierung von Oberflächen mittels einer Rastersondentechnik. In beiden Ausführungsformen ist die Rasterkraftmikroskopie kombiniert mit der Möglichkeit, an jeder Stelle x, y Oberflächenmaterial von der Probe abzutragen und ionisiertes Probenmaterial massenspektroskopisch zu analysieren. Hierfür wird ein Cantilever 1 mit einer Spitze 2 mit durchgängiger, axialer, konischer Höhlung verwandt. Am Apex 3 der Spitze öffnet sich die Höhlung mit einer definierten Apertur.

Die Apertur dient als Austrittsöffnung eines fokussierten Laserimpulses 10 auf die Probe 30 und als Eintrittsöffnung für molekulare Ionen 20, die nach einem Laserimpuls im Bereich der beleuchteten Probenregion entstanden sind.

Die Beleuchtung der Probe ist in der Regel koaxial zur Längsachse der Spitze und findet durch deren Höhlung statt. Die Extraktion der Ionen findet vorzugsweise ebenfalls koaxial zur Spitze und durch die Höhlung statt. Zur Extraktion ist das Flugrohr 21 relativ zur Probe auf ein elektrisches Potential gelegt. Ein elektrisches Feld bildet sich weitgehend axialsymmetrisch zur Flugrohr-Spitzen-Achse aus. Das Feld penetriert die Höhlung der Spitze und führt zur Extraktion der Ionen. Ist das Flugrohr auf einem relativ negativen Potential, werden Ionen mit positiver Summenladung extrahiert und umgekehrt. Die hohe Axialsymmetrie der Anordnung und damit des Feldes führt zu einer weitgehend axialen Extraktion und einem axialen Flug der Ionen. Eine zusätzliche Ionenoptik im Flugrohr (nicht dargestellt) dient zur Rückführung von nicht exakt axial fliegenden Ionen.

Die Fläche, aus der der Materialabtrag stattfindet ist durch die Größe der Apertur der Hohlspitze gegeben. Der Apertur-Durchmesser liegt typischerweise deutlich unterhalb der Wellenlänge des verwandten Lichts.

Die Ausführungsformen in den Figuren 1A, 1B und 2A, 2B unterscheiden sich in der Einkoppelung des Laserlichts: Bei der Ausführungsform nach den Figuren 1A und 1B wird zur Fokussierung ein Objektiv 11 seitlich neben das Flugrohr gestellt. Die Lichtachse 12 verläuft zuerst senkrecht zur Achse des Flugrohrs 21. Das Licht tritt über ein Fenster in das Flugrohr ein, wird über einen Spiegel 13 in Achsrichtung gelenkt und in die Höhlung der Spitze fokussiert. Der Spiegel besitzt eine zentrale Bohrung 24 zum Durchtritt der Ionen.

Bei der Ausführungsform nach den Figuren 2A und 2B sitzt das Objektiv koaxial zum Flugrohr. Das Flugrohr ist in eine zentrale Bohrung 24 des Objektives eingelassen. Kollimiertes Laserlicht wird hinter dem Objektiv in den Strahlengang eingespiegelt. Auch hier besitzt der Spiegel eine zentrale Bohrung zum Durchtritt der Ionen.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Vorrichtung für ein Rastersondenmikroskop, insbesondere ein Rasterkraftmikroskop, mit einer Meßsonde, die ein Nahfeld definiert, und einer Rastereinheit, die eine relative Bewegung der Meßsonde zu einer Probe in allen drei Raumrichtungen ermöglicht, in Kombination mit einem Massenspektrometer mit einer Ionisierungseinheit, einer Extraktionseinheit und einer Analyseeinheit, wobei die Meßsonde eine hohle Spitze (2) aufweist, **dadurch gekennzeichnet, daß** das Nahfeld der Meßsonde von der Ionisierungseinheit genutzt wird, Ionen nur im Nahfeld der Meßsonde zu bilden, wobei die hohle Spitze eine Eintrittsöffnung für die im Nahfeld der Meßsonde gebildeten Ionen aufweist, durch die die Ionen dem Massenspektrometer zur Verfügung gestellt werden, und die Form der Meßsonde eine im wesentlichen axialsymmetrische Feldverteilung der Extraktionseinheit in Bezug zur Achse der Analyseeinheit zuläßt.

2. Vorrichtung nach Anspruch 1, **dadurch gekennzeichnet, daß** die Meßsonde einen Cantilever ist.

3. Vorrichtung nach Anspruch 1 oder 2, **dadurch gekennzeichnet, daß** die Probe mit Hilfe der Rastereinheit in allen drei Raumrichtungen bewegt werden kann.

4. Vorrichtung nach einem der vorangehenden Ansprüche, **dadurch gekennzeichnet, daß** die Ionisierungseinheit einen Laser aufweist und von dem Laser angegebene Lichtstrahlen außeraxial fokussiert sind und dann über einen Spiegel in eine axiale Richtung abgelenkt werden, wobei der Spiegel eine axiale Bohrung aufweist, die den Durchtritt der Ionen zur Analyseeinheit gewährt.

5. Vorrichtung nach einem der Ansprüche 1 bis 3, **dadurch gekennzeichnet, daß** die Ionisierungseinheit einen Laser aufweist und von dem Laser angegebene Lichtstrahlen über einen Spiegel in eine axiale Richtung abgelenkt werden und anschließend mit Hilfe einer Fokussiereinrichtung fokussiert werden, wobei der Spiegel und die Fokussiereinrichtung jeweils eine axiale Bohrung aufweisen, die den Durchtritt der Ionen zur Analyseeinheit gewährt.

6. Vorrichtung nach einem der Ansprüche 1 bis 3, **dadurch gekennzeichnet, daß** die Ionisierungseinheit einen Laser aufweist und von dem Laser angegebene Lichtstrahlen außeraxial auf die Meßsonde gelenkt werden und mittels einer Feldverstärkung eine Ionisierung im Nahfeld der Meßsonde verursachen.

7. Verfahren zur hochaufgelösten Untersuchung einer Meßprobe mit einem Rastersondenmikroskop, insbesondere einem Rasterkraftmikroskop und einem Massenspektrometer, wobei mit dem Rastersondenmikroskop zunächst eine Abbildung der Meßprobe, insbesondere der Topographie der Meßprobe, aufgenommen wird und anschließend zumindest für Teilbereiche von Abschnitten der Meßprobe, die von der Abbildung umfaßt sind, eine nicht zerstörungsfreie, chemische Charakterisierung einer Oberfläche der Meßprobe mit dem Massenspektrometer ausgeführt wird, **dadurch gekennzeichnet, daß** von der Oberfläche der Meßprobe Ionen abgetragen und mittels einer an einer hohlen Spitze einer Meßsonde des Rastersondenmikroskops gebildeten Eintrittsöffnung dem Massenspektrometer zur Verfügung gestellt werden.

8. Verfahren nach Anspruch 7, **dadurch gekennzeichnet, daß** die ausgewählten Bereiche nacheinander so gewählt werden, daß das gesamte vom Rastersondenmikroskop abgebildete Areal analysiert wird und so zusätzlich ein chemisches Abbild der Probe entsteht.

9. Verfahren nach einem der Ansprüche 7 oder 8, **dadurch gekennzeichnet, daß** eine weitere Abtragung der Meßprobe zu einer hochaufgelösten Tiefeninformation führt.

10. Verfahren nach einem der Ansprüche 7 bis 9, **dadurch gekennzeichnet, daß** durch eine Analyse der durch einen Ionisierungsprozess abgetragene Bereich der Abstand zwischen zwei Punkten für eine Ionisierung so gewählt werden kann, daß es zu einem gleichmäßigen Abtrag der Meßprobe führt.

11. Verfahren nach einem der Ansprüche 7 bis 10, **dadurch gekennzeichnet, daß** ein Vergleich zwischen der Information der Rastersondenmikroskopie und der Massenspektrometrie mit hoher lateraler Auflösung möglich ist.

## Claims

1. An apparatus for a scanning probe microscope, in particular a scanning force microscope, with a measurement probe which defines a near field and a scanning unit which allows the measurement probe to move relative to a sample in all three spatial directions, in conjunction with a mass spectrometer with an ionization unit, an extraction unit and an analysis unit, wherein the measurement probe includes a hollow tip (2), **characterized in that** the ionization unit uses the near field of the measurement probe in such a way that ions arc formed only in the near field of the measurement probe, wherein the hollow tip includes an inlet aperture for the ions which arc formed in the near field of the measurement probe through that the ions are provided to the mass spectrometer and the shape of the measurement probe allows an essentially axially symmetrical field distribution of the extraction unit with respect to the axis of the analysis unit.

2. The apparatus as claimed in claim 1, **characterized in that** the measurement probe is a cantilever.

3. The apparatus as claimed in claim 1 or 2, **characterized in that** the scanning unit moves the sample in all three spatial directions.

4. The apparatus as claimed in any one of the preceding claims, **characterized in that** the ionization unit includes a laser which light beam is focused non-axially and then is deflected into an axial direction by means of a mirror, wherein the mirror includes an axial hole which allows the ions to pass through to the analysis unit.

5. The apparatus as claimed in any one of the claims 1 to 3, **characterized in that** the ionization unit includes a laser which light beam is deflected into an axial direction by means of a mirror and then is focused by a focusing device, wherein the mirror and the focusing device each include an axial hole which allow the ions to pass through to the analysis unit.

6. The apparatus as claimed in any one of the claims 1 to 3, **characterized in that** the ionization unit includes a laser which light beam is deflected non-axially onto the measurement probe and cause an ionization in the near field of the measurement probe by means of field amplification.

7. A method for high-resolution examination of a measurement sample using a scanning probe microscope, in particular a scanning force microscope, and a mass spectrometer, wherein the scanning probe microscope is first of all used to record an image of the measurement sample, in particular of the topography of the measurement sample, and then a destructive chemical characterization of a surface of the measurement sample takes place for at least selected areas of the measurement sample that arc comprised by the image using the mass spectrometer, **characterized in that** ions are cut from the surface of the measurement sample and are provided to the mass spectrometer using an inlet aperture formed at a hollow tip of a measurement probe of the scanning probe microscope.

8. The method as claimed in claim 7, **characterized in that** the selected areas are chosen successively such that the entire area imaged by the scanning probe microscope is analyzed, thus additionally resulting in a chemical image of the sample.

9. The method as claimed in any one of claims 7 or 8, **characterized in that** further ablation of the measurement sample leads to high-resolution depth information.

10. The method as claimed in any one of claims 7 to 9, **characterized in that** the distance between two points for ionization can be chosen by an analysis of the area ablated by an ionization process, such that this leads to an uniform ablation of the measurement sample.

11. The method as claimed in any one of claims 7 to 10, **characterized in that** the information from scanning probe microscopy and from mass spectrometry can be compared with high lateral resolution.

## Revendications

1. Dispositif pour un microscope à sonde à balayage, en particulier un microscope à forces atomiques, avec une sonde de mesure qui défini un champ proche et une unité de balayage qui permet un mouvement relatif de la sonde de mesure vers un échantillon dans tous les trois sens spatiaux, en combinaison avec un spectromètre de masse avec une unité d'ionisation, une unité d'extraction et une unité d'analyse, étant donné que la sonde de mesure présente une pointe creuse (2), **caractérisé en ce que** le champ proche de la sonde de mesure est utilisé par l'unité d'ionisation pour former des ions seulement dans le champ proche de la sonde de mesure, étant donné que la pointe creuse présente un orifice d'entrée pour les ions formés dans le champ proche de la sonde de mesure, orifice à travers lequel les ions sont mis à la disposition du spectromètre de masse, et la forme de la sonde de mesure permet une distribution de champ essentiellement axisymétrique de l'unité d'extraction par rapport à l'axe de l'unité d'analyse.

2. Dispositif selon la revendication 1, **caractérisé en ce que** la sonde de mesure est un cantilever.

3. Dispositif selon la revendication 1 ou 2, **caractérisé en ce que** l'échantillon peut être mis en mouvement à l'aide de l'unité de balayage dans toutes les trois directions dans l'espace.

4. Dispositif selon l'une quelconque des revendications précédentes, **caractérisé en ce que** l'unité d'ionisation présente un laser et des rayons lumineux partant du laser sont mis au point hors axe, puis déviés par l'intermédiaire d'un réflecteur dans un sens axial, étant donné que le réflecteur présente un alésage axial qui permet le passage des ions vers l'unité d'analyse.

5. Dispositif selon l'une quelconque des revendications 1 à 3, **caractérisé en ce que** l'unité d'ionisation présente un laser et des rayons lumineux partant du laser sont mis au point hors axe, puis déviés par l'intermédiaire d'un réflecteur dans un sens axial, puis mis au point à l'aide d'un équipement de mise au point, étant donné que le réflecteur et l'équipement de mise au point présentent chacun un alésage axial qui permet le passage des ions vers l'unité d'analyse.

6. Dispositif selon l'une quelconque des revendications 1 à 3, **caractérisé en ce que** l'unité d'ionisation présente un laser et des rayons lumineux partant du laser sont déviés hors axe sur la sonde de mesure et causent, au moyen d'une amplification de champ, une ionisation dans le champ proche de la sonde de mesure.

7. Procédé pour l'examen à haute résolution d'un échantillon de mesure avec un microscope à sonde à balayage, en particulier un microscope à forces atomiques et spectromètre de masse, étant donné qu'on enregistre avec le microscope à sonde à balayage tout d'abord une image de l'échantillon de mesure, en particulier la topographie de l'échantillon de mesure, puis on réalise au moins pour des zones partielles de sections de l'échantillon de mesure qui sont compris dans l'image une caractérisation chimique non-destructive d'une surface de l'échantillon de mesure avec le spectromètre de masse, **caractérisé en ce que** des ions sont extraits de la surface de l'échantillon de mesure et mis à la disposition du spectromètre de masse au moyen d'un orifice d'entrée formé à une pointe creuse d'une sonde de mesure du microscope à sonde à balayage.

8. Procédé selon la revendication 7, **caractérisé en ce que** les zones sélectionnées sont choisies l'une après l'autre de manière à ce que tout le domaine représenté par le microscope à sonde à balayage soit analysé et, ainsi, on obtient en plus une reproduction chimique de l'échantillon.

9. Procédé selon l'une quelconque des revendications 7 ou 8, **caractérisé en ce qu'**un usage supplémentaire de l'échantillon de mesure entraîne une information sur le relief de haute résolution.

10. Procédé selon l'une quelconque des revendications 7 à 9, **caractérisé en ce que,** par une analyse de la zone usée par le processus d'ionisation, l'écartement entre deux points pour une ionisation est choisi de manière à ce qu'on obtienne un usage uniforme de l'échantillon de mesure.

11. Procédé selon l'une quelconque des revendications 7 à 10, **caractérisé en ce qu'**une comparaison de l'information de la microscopie à sonde à balayage avec celle la spectrométrie de masse est possible avec une haute résolution latérale.
